# FASCICULE DE BREVET EUROPEEN

(11) **EP 3 745 684 B1**
(45) Date de publication et mention de la délivrance du brevet: **21.09.2022**
(21) Numéro de dépôt: 20186279.4
(22) Date de dépôt: 08.11.2013
(51) Int. Cl.: H04W 84/20, H04W 40/02, H04W 12/069, H04L 61/5061, H04L 61/5046, H04L 61/5076, H04L 61/5014

(54) **PROCÉDÉ DE FUSION DE DEUX SOUS-RÉSEAUX EN UN UNIQUE RÉSAU AD HOC IMPLEMENTANT LE PROTOCOLE D2HCP**
VERFAHREN ZUR FUSION VON ZWEI UNTERNETZWERKEN ZU EINEM AD-HOC-NETZWERK UNTER VERWENDUNG DES D2HCP-PROTOKOLLS
METHOD FOR MERGING TWO SUB-NETWORKS INTO A SINGLE AD HOC NETWORK IMPLEMENTING THE D2HCP PROTOCOL

(30) Priorité: 21.12.2012 FR 1203587; 20.08.2013 FR 1301963
(43) Date de publication de la demande: 02.12.2020
(62) Demande divisionnaire de: 13798243.5
(73) Titulaire: AIRBUS DS SAS, 78990 Elancourt (FR)
(72) Inventeur: DENIAUD, Thierry, 78180 Montigny le Bretonneux (FR); SHABRAWY, Karim, 92240 Malakoff (FR)
(74) Mandataire: Cabinet Camus Lebkiri

(56) Documents cités:
- NESARGI S ET AL: "MANETconf: configuration of hosts in a mobile ad hoc network", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 2, 23 juin 2002 (2002-06-23), pages 1059-1068, XP010593670, DOI: 10.1109/INFCOM.2002.1019354 ISBN: 978-0-7803-7476-8
- LUIS JAVIER GARCÍA VILLALBA ET AL: "Distributed Dynamic Host Configuration Protocol (D2HCP)", SENSORS, vol. 11, no. 12, 18 décembre 2011 (2011-12-18), pages 4438-4461, XP055101650, ISSN: 1424-8220, DOI: 10.3390/s110404438
- WANGI N I C ET AL: "Address autoconfiguration in wireless ad hoc networks: protocols and techniques", IEEE WIRELESS COMMUNICATIONS, IEEE SERVICE CENTER, PISCATAWAY, NJ, US, vol. 15, no. 1, 1 février 2008 (2008-02-01), pages 70-80, XP011480404, ISSN: 1536-1284, DOI: 10.1109/MWC.2008.4454707
- LUIS JAVIER VILLALBAA ET AL: "An Extension Proposal of D2HCP for Network Merging", JOURNAL OF UBIQUITOUS SYSTEMS AND PERVASIVE NETWORKS, vol. 3, no. 1, 15 septembre 2011 (2011-09-15), pages 35-40, XP055101607, ISSN: 1923-7324, DOI: 10.5383/JUSPN.03.01.007

## Description

Le domaine de l'invention concerne un procédé et un système correspondant permettant la fusion de deux sous-réseaux ad hoc implémentant le protocole D2HCP.

### ETAT DE L'ART

La gestion des découvertes de nouveaux nœuds dans un réseau doit prendre en compte un mécanisme de configuration de l'allocation d'adresses IP de ces nouveaux nœuds. Selon le type de réseau et du protocole de routage implémenté il existe différentes approches d'allocation d'adresses IP. Le protocole DHCP permet de mettre en œuvre une gestion dynamique des adresses IP, notamment de leur allocation. En revanche DHCP nécessite un serveur centralisé pour la gestion de ses fonctions.

En revanche ce protocole n'est pas adapté aux réseaux ad hoc.

Selon les solutions exposées ci-après, une problématique est de trouver un compromis entre une première et une seconde approche.

Selon une première approche :
- une architecture souple peut être déployée dans laquelle chaque nœud gère peu de données concernant les autres nœuds ;
- une allocation temporaire d'adresses est nécessaire ;
- une configuration par étapes est nécessaire.

Selon une seconde approche :
- une architecture plus complète est envisagée dans laquelle les nœuds ont une bonne connaissance du réseau
- une implémentation reste complexe du fait des traitements dynamiques que doivent supporter les nœuds
- une complexité de gestion des nœuds et une augmentation du trafic sont nécessaires.

Une solution appelée MANETConf développée par Nesargi et Prakash ("MANETconf: configuration of hosts in a mobile ad hoc network",PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 2, 23 juin 2002 (2002-06-23), pages 1059-1068) permet de gérer l'arrivée de nœuds dans un réseau ad hoc. Un nœud entrant émet un message de découverte et établit un premier échange avec le nœud lui répondant le plus rapidement. Ensuite, une allocation d'adresse IP est effectuée par ce nœud au nœud entrant sous réserve que l'adresse IP soit laissée libre par tous les nœuds du réseau. Cette dernière étape nécessite l'émission de messages dans le réseau et l'attente de réponses de la part de tous les nœuds. Cette solution comporte l'inconvénient de gérer de nombreux messages au travers le réseau et impose donc un trafic important.

Une autre solution impose l'implémentation du protocole DAAP qui permet de gérer l'arrivée de nœuds dans un réseau par un algorithme permettant de déterminer un maitre dynamiquement. Dans cette solution, chaque nœud envoie périodiquement des messages de découverte aux nœuds voisins avec l'identifiant du réseau de manière à détecter des situations de fusion. En revanche, c'est le nœud maitre qui gère l'allocation de l'identifiant réseau et l'adresse IP de plus haut niveau. Un problème de cette solution est que si le nœud maitre se déconnecte, du réseau auquel il est attaché, le service n'est plus maintenu. En outre, il va former un nouveau réseau et par conséquent, plusieurs réseaux vont pouvoir avoir le même identifiant. Ce protocole ne semble pas adapté aux problématiques d'un réseau ad hoc mobile devant assurer un minimum de sécurité.

Une autre solution appelée système « Buddy » est basée sur une approche décentralisée d'un réseau. Dans cette solution, chaque nœud comprend un ensemble d'adresses IP libres prévues pour les allocations d'adresses de nouveaux nœuds entrants. Les ensembles d'adresses sont disjoints d'un nœud à l'autre. Ce système permet de gérer des situations de fusion de réseau par la gestion d'uniques identifiants réseaux. Un des inconvénients de ce système est la génération d'un trafic important de messages d'un protocole de routage encombrant le réseau mobile ad hoc et donc ses performances. Notamment, l'encombrement du réseau est important lorsqu'un nœud entre ou quitte le réseau pour prévenir les autres nœuds.

Une solution appelée EMAP désignant « Extenssible MAGNET Auto-configuration Protocole » permet l'allocation d'une adresse unique à un nœud pour les communications internes au MANET. Un nœud entrant génère des adresses IP valides et vérifie leur unicité via une requête « Duplicate Adress Détection (DAD) ».

Un problème de cette solution réside dans la gestion de l'unicité des adresses allouées et des risques de conflits d'adresses pouvant survenir en cas de fusion de réseau.

Une autre solution appelée NOA-OLSR signifiant « No Overhead Auto configuration OLSR » permet de gérer une entrée progressive d'un nouveau nœud dans un réseau ad hoc. Cette solution comporte différentes étapes de configuration permettant d'allouer une adresse dynamiquement à nouvel arrivant dans le réseau. Bien que cette solution permette un déploiement efficace limitant la charge du réseau, un des principaux inconvénients est la non garantie de l'allocation d'une adresse IP unique à un nœud entrant dans le réseau.

Le protocole D2HCP basé sur une architecture de type système Buddy permet de garantir l'allocation d'une unique adresse IP à un nœud entrant dans un réseau ad hoc. Un avantage est qu'avec ce protocole associé au protocole de routage OLSR chaque nœud a une bonne connaissance de la topologie du réseau et prend en compte les arrivées et départs des nœuds dans le réseau.

En revanche, ces mécanismes ne permettent pas de gérer actuellement la découverte d'un nouveau sous-réseau impliquant des règles d'allocations d'adresses IP à des nœuds de part et d'autre de chaque sous-réseau se découvrant tout en maintenant un flux de données généré ne perturbant pas les performances du réseau.

### RESUME DE L'INVENTION

L'invention permet de résoudre les inconvénients précités.

L'objet de l'invention concerne en premier lieu un procédé selon la revendication 1 et un système correspondant selon la revendication 4.

Les revendications dépendantes 2 et 3 représentent des modes de réalisation préférés.

### BREVE DESCRIPTION DES FIGURES

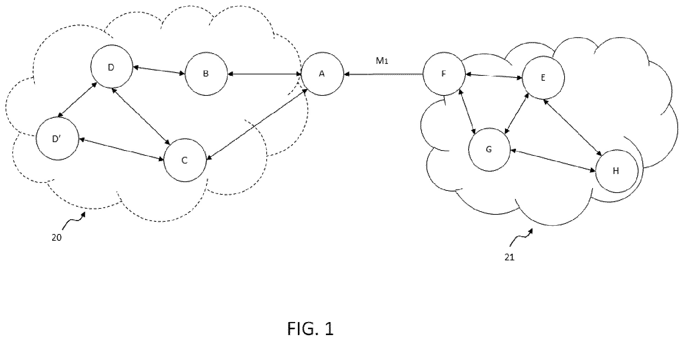

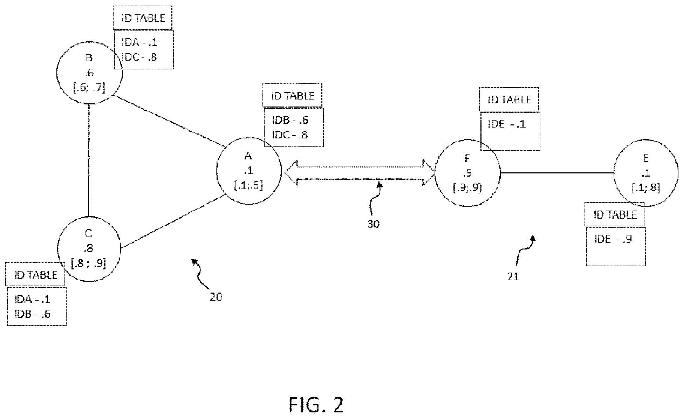

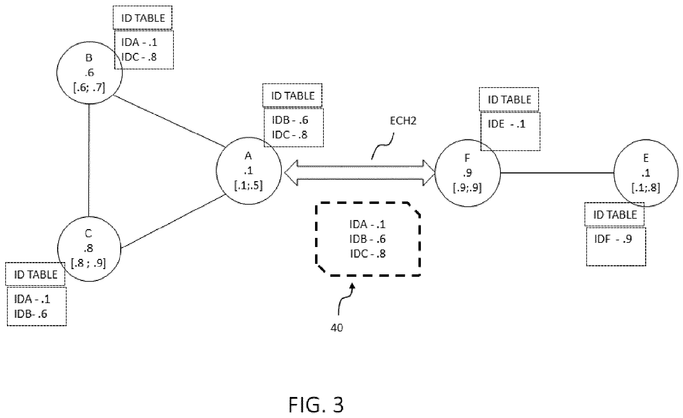

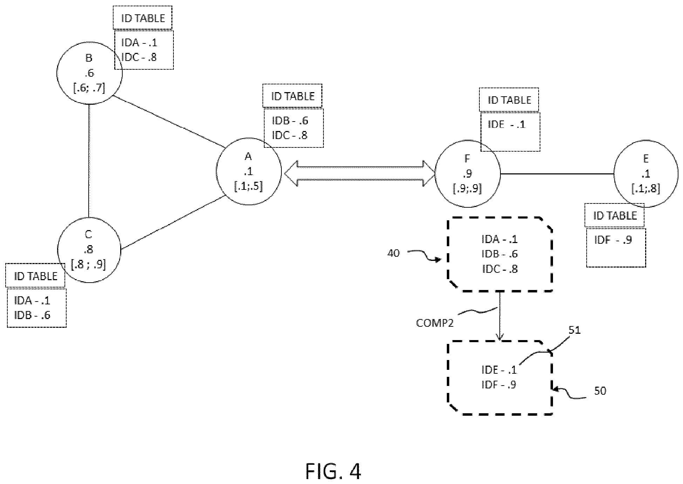

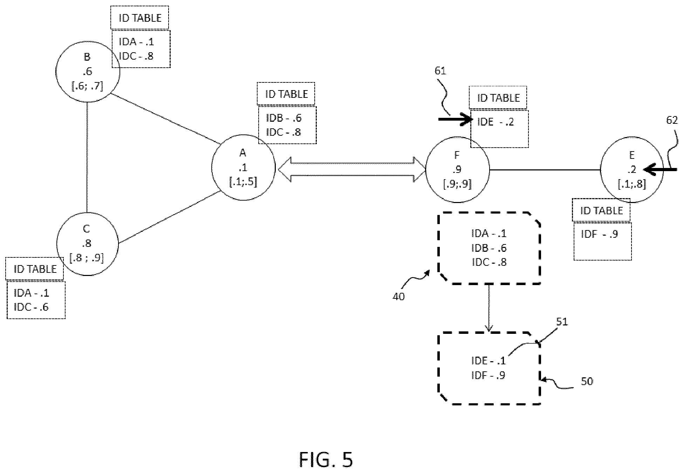

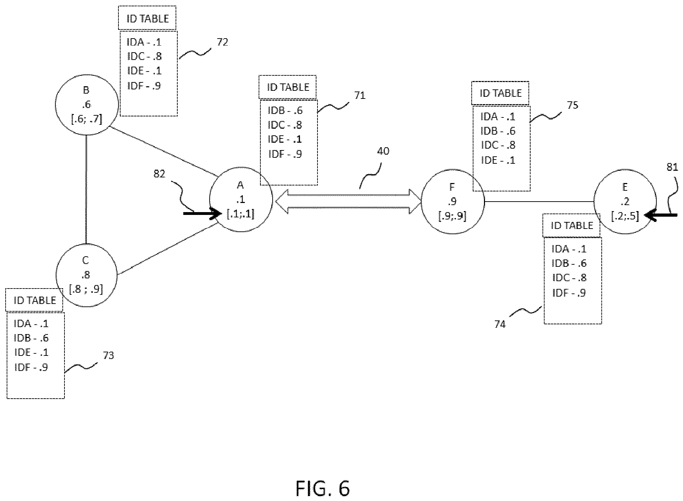

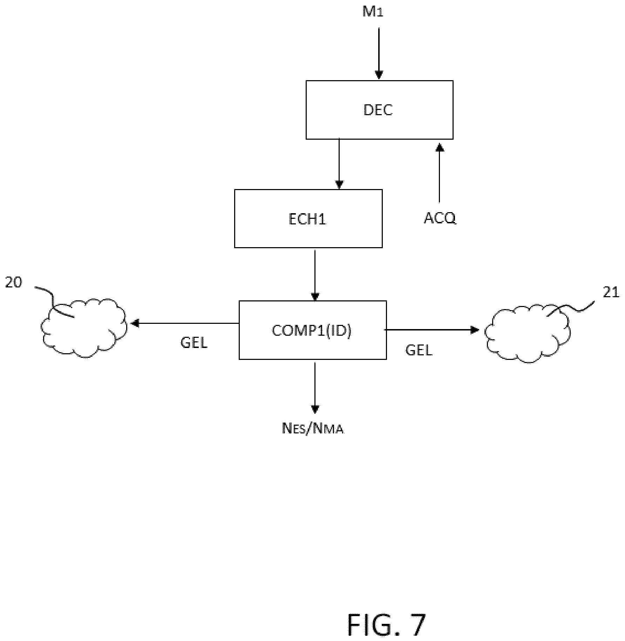

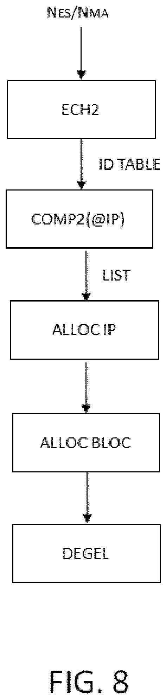

D'autres caractéristiques et avantages de l'invention ressortiront à la lecture de la description détaillée qui suit, en référence aux figures annexées, qui illustrent :
▪ figure 1 : deus sous-réseaux se découvrant et utilisant le procédé de l'invention ;
▪ figure 2 : la première étape de découverte du procédé permettant de déterminer un nœud esclave et un nœud maitre ;
▪ figure 3 : l'étape de transfert des adresses IP et identifiants du sous-réseau du nœud maitre au nœud esclave ;
▪ figure 4 : l'étape de comparaison des doublons d'adresses IP ;
▪ figure 5 : l'allocation des nouvelles adresses IP des nœuds ayant des doublons d'adresses IP ;
▪ figure 6 : la diffusion des nouvelles tables de routage et ID TABLE au sein du réseau fusionné ;
▪ figure 7 : les principales étapes du procédé de détermination des nœuds esclave et maitre ;
▪ figure 8 : les principales étapes du procédé de fusion de deux sous-réseaux.

### DESCRIPTION

La figure 1 illustre deux sous-réseaux 20 et 21 isolés initialement l'un de l'autre. Le premier sous-réseau 20 comprend une pluralité de nœuds A, B, C, D, D'. Le second sous-réseau 21 comporte une pluralité de nœuds E, F, G, H.

Chaque nœud d'un sous-réseau connait les nœuds du même sous-réseau. Un protocole de routage permet la mise à jour d'une table de routage permettant de distribuer et enregistrer les informations des autres nœuds d'un même sous-réseau. Un ensemble de données d'authentification ENS1 peut être stocké dans chaque nœud, cet ensemble est également appelé la table ID TABLE car les données d'authentifications peuvent être stockées sous forme d'une table d'une base de données. Cette dernière peut comprendre la liste des identifiants de chaque nœud connu d'un nœud donné d'un même sous-réseau. La table ID TABLE comprend en outre la liste des adresses IP associées à chaque identifiant de chaque nœud.

La table ID TABLE est mise à jour à chaque découverte d'un nouveau nœud ou lorsque des informations sont modifiées concernant l'authentification d'un nœud, comme par exemple son adresse IP. En outre, la table ID TABLE peut comprendre des certificats d'authentification des nœuds ou toute autre donnée relative à l'authentification des nœuds d'un sous-réseau.

La table ID TABLE peut être mise à jour en fonction des mises à jour de la table de routage, les deux tables pouvant être liées.

En résumé, la table ID TABLE d'un nœud donné contient pour chaque nœud connu de ce nœud du même sous-réseau :
- Son identifiant unique
- Son adresse IP
- Des données d'authentification (optionnelles)

Chaque nœud d'un réseau ad hoc comprend :
- une table de routage pour l'exécution de services permettant d'effectuer le routage des messages ;
- Une table ID TABLE pour l'exécution de services d'authentification entre les communications de nœuds entre eux.

Les deux tables peuvent être utilisées conjointement pour :
- assurer une synchronisation des services et ;
- assurer une mise à jour des données des tables.

Les applications et services effectuant des contrôles d'authentification au sein d'un nœud donné s'appuient principalement sur la table ID TABLE qui comprend les identifiants physique de chaque nœud connu dudit nœud donné.

Sur la figure 1, est illustré le cas où un premier nœud A d'un premier sous réseau 20 découvre un second nœud F d'un second sous réseau 21. La découverte du second nœud F s'effectue par la réception d'un message d'un protocole de routage de type HELLO ou TC lorsque le protocole de routage est le protocole OLSR.

Le premier nœud A recevant un message d'un second nœud F compare l'identifiant ou l'adresse IP du second nœud F qui peut être extraite du message reçu afin de l'authentifier. Le premier nœud A n'ayant ni l'adresse IP ni l'identifiant dans les tables de routage ou I'ID TABLE détecte un nouveau nœud.

A ce stade de la détection, le premier nœud A peut :
- soit conclure qu'un nouveau nœud F accède au réseau et qu'il est nécessaire d'instancier une procédure permettant l'attribution d'une nouvelle adresse IP au second nœud F ;
- soit conclure qu'un nouveau sous-réseau est potentiellement détecté lorsque le nœud découvert possède déjà une adresse IP.

Le procédé de détection d'une situation de fusion de deux sous-réseaux 20, 21 comprend donc dans un premier temps :
- la réception d'un message M₁ d'un protocole de routage par un nœud quelconque, dit « nœud découvrant » qui est représenté sur la figure par le premier nœud A, d'un sous-réseau donné ;
- l'extraction par ce premier nœud A de l'identifiant de l'émetteur du message M₁ qui est le second nœud F puis le contrôle que l'identifiant IDF du second nœud F est un nouvel identifiant, on l'appelle : « nœud de découverte », il est représenté sur la figure 2 par le second nœud F ;
- le contrôle de la présence d'une adresse IP associée au nouvel identifiant IDF du second nœud F dans les données reçues par le premier nœud A.

La figure 2 représente un schéma détaillé de certains nœuds de deux sous-réseaux 20, 21. Pour la compréhension de l'invention et la clarté de la description, le premier sous-réseau 20 est représenté avec uniquement trois nœuds A, B, C, et le second sous-réseau est représenté avec uniquement deux nœuds E, F.

Sur la figure 2, les tables ID TABLE de chaque nœud sont représentées. La table ID TABLE d'un nœud donné comprend l'identifiant et l'adresse IP de chaque nœud connu du même sous-réseau.

Chaque nœud comprend une adresse IP et un bloc d'adresses IP définissant une plage comprenant l'adresse du nœud en question et une liste d'adresses IP libres (adresses IP libres suivant l'adresse IP du nœud jusqu'à l'adresse IP non libre, affectée à un autre nœud). Les blocs d'adresses sont utilisés dans les réseaux ad hoc pour l'attribution dynamique d'une nouvelle adresse IP à un nœud se connectant au réseau. En général, le nœud qui répond le plus vite à une requête d'adresse d'un nouvel arrivant, alloue au nouvel arrivant d'une part une adresse IP de son bloc et d'autre part un demi-bloc d'adresses IP (le bloc d'adresses supérieures à l'adresse IP fournie). L'attribution d'un demi-bloc d'adresses IP permet :
- au nouvel arrivant d'obtenir une liste d'adresses IP disponibles si un autre nouvel arrivant venait à être raccordé au sous-réseau par la suite ;
- au nœud découvrant de garder un demi-bloc d'adresses IP disponibles de sorte à permettre d'autres futures attributions d'adresse IP à de nouveaux arrivants.

Les identifiants, adresses IP et blocs d'adresses IP des nœuds du premier sous-réseau sont (à titre d'exemple - NB : seul le dernier digit des adresses IP est représenté) :
∘ Nœud A : IDA, @IP = .1, bloc(@IP) = [.1 ; .5] ;
∘ Nœud B : IDB, @IP = .6, bloc(@IP) = [.6 ; .7] ;
∘ Nœud C : IDC, @IP = .8, bloc(@IP) = [.8 ; .9].

Par commodité, les adresses et blocs d'adresses sont simplifiées dans la présente description.

Les identifiants, adresses IP et blocs d'adresses IP des nœuds du second sous-réseau sont (à titre d'exemple - NB : seul le dernier digit des adresses IP est représenté) :
∘ Nœud E : IDE, @IP = .1, bloc(@IP) = [.1 ; .8] ;
∘ Nœud F : IDF, @IP = .9, bloc(@IP) = [.9 ; .9].

Le procédé de détection d'une situation de fusion de deux sous-réseaux 20, 21 d'un réseau ad hoc de l'invention comprend différentes étapes représentées sur la figure 7 dont :
∘ une étape de découverte, notée DEC :
∘ une étape d'échanges de données, notée ECH1 et ;
∘ une étape de comparaison, notée COMP1 (ID).

Ces trois étapes sont détaillées dans la suite de la description au travers des figures 2 et 7.

La flèche 30 de la figure 2 comprend le message M₁ de découverte qui correspond au premier message reçu par le premier nœud A provenant du second nœud F. Le premier message M₁ est un message d'un protocole de routage comprenant au moins : l'identifiant du nœud second F et son adresse IP.

En outre, la trame de découverte M₁ peut comprendre un certificat d'authentification permettant la réalisation par le premier nœud A d'un procédé d'authentification permettant de :
- sécuriser les échanges de données entre le nœud F et le nœud A et/ou ;
- authentifier le second nœud F par le premier nœud A.

Par ailleurs, la flèche 30 comprend éventuellement d'autres données pouvant être échangées suite à la réception du message M₁ :
∘ un acquittement, noté ACQ sur la figure 7, du premier nœud A vers le second nœud F ou ;
∘ des échanges de données ECH1 correspondant à une seconde étape du procédé de l'invention.

Lorsque le premier nœud A détecte un nouvel identifiant IDF et la présence d'une adresse IP_{F} du second nœud F pour la première fois, une situation de fusion de deux sous-réseaux est détectée.

Dans ce cas, le premier nœud A peut également répondre au second nœud F en générant un message d'acquittement ACQ informant le second nœud F qu'une découverte a eu lieu. Le second nœud F prend donc également connaissance qu'une situation de fusion est à envisager. Ce message d'acquittement ACQ de retour permet au second nœud F de détecter à son tour un nouveau sous-réseau 20 et d'identifier une situation de fusion.

Le premier nœud A et le second nœud F peuvent procéder dans leur propre sous-réseau à une vérification de non-concurrence de la fusion : chacun des deux nœuds envoie dans leur propre sous-réseau une demande d'autorisation d'initialisation de la fusion et attend la réponse des nœuds connus du sous-réseau. Si un des nœuds connus du sous-réseau répond négativement à la demande d'autorisation d'initialisation de la fusion, la fusion peut être interrompue dans les deux sous-réseaux. Si aucune réponse négative ne parvient d'un des nœuds connus des sous-réseaux en un laps de temps donné, la fusion peut continuer.

Le premier nœud A et le second nœud F procèdent alors à une seconde étape correspondant à une étape d'échange de données ECH1, dites données d'initialisation de la fusion ou plus simplement données d'initialisation. L'échange de données d'initialisation comprend la taille de chaque sous-réseau, c'est-à-dire le nombre de nœuds « p » connus par le premier nœud A dans le premier sous-réseau 20 et respectivement le nombre « q » de nœuds connus par le second nœud F dans le second sous réseau 21.

En outre, l'échange de données d'initialisation ECH1 comprend l'identifiant ID₂₀ et ID₂₁ de chaque sous-réseau 20, 21.

Selon les modes de réalisations, les échanges d'identifiants des sous-réseaux 20, 21 peuvent avoir lieu :
- dans la première étape, c'est-à-dire lors de la transmission du message de découverte M₁ et/ou lors d'échanges d'acquittement ACQ si le protocole de routage intègre ce service ;
- dans la seconde étape ECH1 lors des échanges de données d'initialisation entre le premier nœud A et le second nœud F, ce cas est celui qui est décrit dans le mode de réalisation de l'invention.

Si le premier nœud A n'a pas acquitté la trame de découverte M₁, alors l'échange de données ECH1 peut comprendre les identifiants des premier et/ou second nœuds, respectivement A, F. Le cas où aucun n'acquittement n'est envoyé du premier nœud A vers le second nœud F, correspond au cas où l'étape d'échange de données ECH1 est instanciée directement par le premier nœud A lorsque l'étape de découverte DEC du second nœud F a eu lieu.

Si le premier nœud A acquitte le message M₁, il peut à son tour indiquer au second nœud F qu'une fusion est détectée, par exemple, une variable indiquant une fusion peut être générée dans le message d'acquittement.

Une première étape de comparaison COMP1 (ID) des tailles p, q de chaque sous-réseau 20, 21 permet de déterminer un nœud esclave, noté N_{ES}, et un nœud maitre, noté N_{MA}, parmi le premier nœud A et le second nœud F.

Un exemple d'implémentation permet de définir une règle permettant d'élire le nœud maitre N_{MA} et le nœud esclave N_{ES}.

Le sous-réseau de plus petite taille dans le cas de la figure 2 est le second sous-réseau 21 car il possède moins de nœuds que le premier sous-réseau 20, on a : q = 2 < p = 3. La détermination du sous-réseau de plus petite taille permet de définir le nœud esclave comme étant le second nœud F.

Dans la suite de la description on appelle indifféremment le premier nœud A : le « nœud A », le « premier nœud maitre A » ou le « nœud maitre A » ou le « nœud N_{MA} ». Identiquement, le second nœud F est indifféremment appelé le « nœud F », le « second nœud esclave F » ou le « nœud esclave F » ou le « nœud N_{ES}» selon le contexte.

La taille d'un sous-réseau correspond à la taille de la table ID TABLE d'un nœud donné dudit sous-réseau puisque la table comporte autant d'entrées que de nœuds connus de ce nœud donné. Dans le cas de la figure 2, le nœud esclave est le second nœud F, c'est-à-dire le nœud initialement découvert par le premier nœud A. Le nœud maitre N_{MA} correspond alors au nœud appartenant au sous-réseau de plus grande taille, dans l'exemple de la figure 2, il s'agit du premier sous-réseau 20.

On a NMA = A et N_{ES} = F.

L'invention s'applique de la même manière si le nœud découvert en premier devenait le nœud maitre en raison d'une table ID TABLE plus grande que le nœud découvrant.

Dans la présente description, un seul cas est décrit et correspond au cas où le premier nœud A découvre en premier le second nœud F, le nœud A comportant plus d'entrées dans la table ID TABLE que le second nœud F.

Un avantage est de définir une séquence permettant d'engager une fusion pas à pas de deux sous réseaux 20, 21 par la définition d'un couple maitre/esclave N_{MA}/N_{ES} et des rôles distincts de chacun des deux nœuds du couple.

Cette élection d'un nœud maitre N_{MA} et d'un nœud esclave N_{ES} permet de coordonner les échanges de données dans les deux sous-réseaux 20, 21 et d'éviter des situations de conflits dans la procédure de fusion desdits sous-réseaux 20, 21.

Lorsque les tailles des deux sous-réseaux 20, 21 sont identiques, c'est-à-dire qu'on a l'égalité suivante p = q, alors une seconde règle peut être appliquée. La seconde règle peut être par exemple : le sous-réseau ayant un identifiant de plus grande valeur parmi les deux sous-réseaux se découvrant, détermine le nœud maitre N_{MA}. Les identifiants des réseaux sont définis de telle sorte à représenter une valeur numérique. On compare donc ID₂₀ < / > ID₂₁.

Le nœud esclave N_{ES} est par conséquent le nœud ayant l'identifiant de plus petite valeur.

Lorsque le nœud maitre NMA et le nœud esclave N_{ES} sont déterminés par le procédé de détection d'une situation de fusion de l'invention, certaines opérations sont interdites au sein des deux sous-réseaux pendant l'exécution du procédé de fusion de l'invention.

Par exemple, dans un mode de réalisation, le nœud maitre N_{MA} interdit toute nouvelle allocation d'adresse IP à un nœud se déclarant dans un des sous-réseaux 20 ou 21 tant que la fusion n'est pas terminée.

Cette étape permet d'assurer que le déroulement de la fusion des deux sous-réseaux 20, 21 n'est pas altérée par l'attribution de nouvelles adresses IP à un nœud de l'un des deux sous-réseaux. Cette situation pourrait provoquer des conflits de doublons d'adresses IP.

Le nœud maitre NMA (respectivement le nœud N_{ES}) envoie à tous les nœuds du sous-réseau 20 (respectivement à tous les nœuds du réseau 21) un message, dit « de gel », noté GEL. Sur la figure 7, le message est envoyé d'une part aux nœuds B et C du sous-réseau 20 et au nœud E du sous-réseau 21.

Le message GEL est envoyé dans les deux sous-réseaux 20, 21 dès que le nœud maitre N_{MA} et le nœud esclave N_{ES} sont identifiés par le procédé de détection d'une situation de fusion de l'invention.

Le message GEL comprend les deux identifiants ID₂₀, ID₂₁ des deux sous-réseaux 20, 21 et un indicateur indiquant qu'une fusion est en cours.

Le message de GEL permet d'indiquer à chaque nœud qu'une fusion est engagée et que certaines opérations sont bloquées telles que :
- l'opération consistant en une allocation d'une adresse IP à un nouveau nœud se déclarant dans l'un des deux sous-réseaux ;
- l'opération consistant à initier une nouvelle fusion avec un autre sous-réseau.

De ce fait, toute nouvelle demande de fusion d'un autre nœud est alors gelée. En effet, ceci peut se produire lorsque deux sous-réseaux se découvrent, plusieurs nœuds peuvent concourir à la découverte des nœuds de l'autre sous-réseau.

Lorsqu'un nœud reçoit un message GEL, il enregistre les identifiants ID₂₀, ID₂₁ des deux sous-réseaux 20, 21 et entre dans un mode d'attente. Le mode d'attente permet au nœud d'un sous-réseau de rester à l'écoute d'autres messages permettant de réaliser le déploiement de la fusion des deux sous-réseaux 20, 21.

La sortie du mode d'attente peut se faire de deux manières :
- soit à l'échéance d'un minuteur déclenché jusqu'à la réception d'un autre message permettant de continuer la procédure de fusion (message de dégel) ;
- soit un message dit de dégel, noté DEGEL, est reçu et indique que la fusion est terminée ou abandonnée.

Selon un autre mode de réalisation, le message GEL peut être envoyé dès que l'étape de découverte DEC est réalisée, c'est-à-dire dès qu'un nœud a une connaissance qu'un sous-réseau est présent et qu'une opération de fusion va être engagée. Ce cas ne permet pas d'envoyer les deux identifiants ID₂₀, ID₂₁ des deux sous-réseaux 20, 21 à chaque nœud. Ce cas de figure nécessiterait d'implémenter un traitement particulier du nœud F qui a envoyé un message de découverte et qui recevrait en retour un message GEL comportant les deux identifiants ID₂₀, ID₂₁. Cependant, ce cas reste une possible implémentation du procédé de l'invention selon un mode de réalisation.

Dans la présente description, le message GEL est envoyé par le nœud maitre N_{MA}, c'est-à-dire le premier nœud A, et le nœud esclave N_{ES}, c'est-à-dire le second nœud F, dès que la comparaison COMP1 (ID) des tailles p, q des sous-réseaux 20, 21 a été effectuée comme représenté à la figure 7.

En conséquence, préférentiellement pendant le procédé de fusion de l'invention, aucun message de routage, de type HELLO ou TC lorsque le protocole OLSR est mis en œuvre, provenant d'un potentiel autre sous-réseau n'est accepté par les nœuds du premier et du second sous-réseau 20 et 21.

Lorsque le second nœud esclave F et le premier nœud maitre A sont déterminés, un procédé de fusion permet de réaliser la fusion des deux sous-réseaux 20, 21 en un unique réseau ad hoc.

La figure 8 permet de représenter les différentes étapes du procédé de fusion de l'invention. Le procédé de fusion de deux sous-réseaux est engagée lorsque qu'un nœud esclave N_{ES} et un nœud maitre NMA sont identifiés de part et d'autre de chacun des deux sous-réseaux 20 et 21. La première étape est notée ECH2 comprend un second «échange de données » entre le premier nœud A maitre et le second nœud esclave F.

En outre, la figure 3 permet d'illustrer la première étape ECH2 de ce procédé de fusion sur la même architecture que la figure 2.

La première étape ECH2 comprend l'envoi 40 par le premier nœud A (le nœud maitre) des données d'identifiants ID et d'adresses IP des nœuds A, B et C du premier sous-réseau 20. Les informations de la table ID TABLE du premier nœud maitre A peuvent être envoyées de sorte à ce que le second nœud esclave F reçoive une table comportant toutes les adresses IP associées aux identifiants ID des nœuds du sous-réseau 20 du premier nœud maitre A. On note la table ID TABLE du nœud A : ID TABLE(A). La même notation est utilisée pour les autres tables comportant les données d'authentification des autres nœuds. La table du second nœud esclave F est notée ID TABLE (F)

Une étape de comparaison, notée COMP2(@IP) sur la figure 8, du procédé de fusion est réalisée par le second nœud esclave F. La comparaison permet de comparer d'une part chaque adresse IP comprise dans un premier ensemble de données ENS1 également considéré comme la table ID TABLE(A) reçue par le second nœud esclave F avec chaque adresse IP comprise dans un second ensemble de données ENS2 également considéré comme la table ID TABLE(F) contenue dans le second nœud esclave F.

Cette comparaison est nécessairement réalisée par le nœud esclave F puisque c'est le second nœud esclave F qui possède les deux tables après l'envoi de la table ID TABLE(A) par le premier nœud A.

La figure 4 représente cette étape de comparaison par la comparaison des données envoyées de I'ID TABLE (A) 40 et des données 50 de I'ID TABLE(F).

Le procédé de fusion de l'invention permet de détecter le ou les adresse(s) IP doublon(s), telle que l'adresse IP, notée 51, ayant pour valeur « .1 » du nœud E du second sous-réseau 21 qui est identique à celle du nœud A du sous-réseau 20. Les doublons d'adresses IP sont stockés dans une liste de doublons, notée LIST, qui est établie après l'opération de comparaison COMP2(@IP).

On nomme un nœud du second sous-réseau 21 un « nœud doublon » lorsque son adresse IP est identique à une adresse IP d'un nœud du premier sous réseau 20.

Lorsque les doublons ont été identifiés par le second nœud esclave F dans le second sous-réseau 21, une étape d'allocation ALLOC IP de nouvelles adresses IP est engagée.

La figure 5 illustre l'étape d'allocation ALLOC IP de nouvelles adresses IP aux nœuds doublons. En l'occurrence, dans l'exemple de la figure 5, un seul nœud doublon E est détecté suite à l'étape de comparaison COMP2(@IP). En effet, la valeur de l'adresse IP du nœud E est de « .1 » et est identique à la valeur du nœud A du premier sous-réseau 20.

Le second nœud esclave F envoie un message aux nœuds doublons, c'est-à-dire dans l'exemple de la figure 5 au nœud E du sous-réseau 21 de manière à forcer le changement d'adresse IP du nœud doublon E. Une nouvelle adresse « .2 » est attribuée au nœud E. Elle est choisie parmi les adresses IP libres connues du nœud esclave. En outre, le bloc d'adresses du nœud A du premier sous réseau 20 peut être pris en compte de manière à garantir que la nouvelle adresse libre attribuée .2 est bien libre dans les deux sous-réseaux.

Le nœud esclave peut enclencher un minuteur de sorte à attendre un acquittement du nœud doublon E. Si l'acquittement n'est pas reçu à la fin du minuteur, un message d'allocation peut être réémis vers le nœud doublon jusqu'à ce qu'un acquittement soit généré vers le second nœud esclave F. Si aucun n'acquittement n'est reçu par le second nœud esclave F après N tentatives, alors le nœud doublon E est considéré comme étant déconnecté et la procédure d'allocation est terminée. Cette étape est répétée pour tous les nœuds doublons lorsque plusieurs nœuds doublons ont été détectés par l'étape de comparaison COMP(@IP) du procédé de fusion.

Lorsque le second nœud esclave F est un nœud doublon, la procédure d'allocation d'une nouvelle adresse IP lui est appliquée.

Dans un mode de réalisation, un second message est envoyé aux autres nœuds du sous-réseau 21 de manière à ce que tous les nœuds prennent en compte la nouvelle adresse IP du nœud doublon E. Ainsi chaque nœud peut modifier l'adresse IP du nœud E dans sa table de routage et dans sa table de données d'identification ID TABLE.

Ainsi dans l'exemple de la figure 5, on note l'attribution de la nouvelle adresse IP référencée 62 sur la figure 5: @IP(E) = .2 et la modification dans I'ID TABLE(F) de cette adresse IP par une référence 61.

Une étape de calcul des blocs d'adresses IP, notée ALLOC BLOC, des nœuds doublons du second sous réseau 21 est engagée conjointement ou successivement à l'étape d'allocation de la nouvelle adresse IP des nœuds doublons.

Dans le cas de la figure 6, le second noeud esclave (F) calcule et transmet au nœud E ayant changé d'adresse IP un nouveau bloc 81 (dans l'exemple, le bloc est issu du premier bloc en le tronquant). Le premier bloc [.1 ; .5] devient alors le second bloc [.2 ; .5] du nœud E.

Dans un premier mode de réalisation, le second nœud esclave F calcule et transfère au premier nœud maitre A : le bloc qui doit être attribué au nœud (j) du premier sous-réseau 20 qui porte l'adresse qui était en doublon avec celle du nœud E de sorte que le nœud maître A transmette au nœud (j) ce nouveau bloc. En outre, si (i) est le nœud dont le bloc d'adresse IP libre comporte l'adresse IP que le nœud esclave F a choisi pour le nœud doublon E, le nœud esclave F calcule et transfère au nœud (i) son bloc d'adresse IP libre.

Dans un second mode de réalisation, les données mises à jour d'adresses IP et de nouveau blocs peuvent être transmises avec un message de DEGEL comme décrit ci-après à l'étape de DEGEL.

Le même fonctionnement s'applique si l'adresse IP en doublon concerne un autre nœud que le premier nœud maitre A du premier sous-réseau 20. Le premier nœud maitre A peut alors effectuer l'attribution d'un nouveau bloc 82 dans le premier sous-réseau 20 au nœud ayant une adresse IP en doublon avec un nœud doublon du second sous-réseau 21.

Le bloc initial [.1 ; .5] du premier nœud A est recalculé après l'identification des doublons des deux sous-réseaux 20, 21, le second bloc ainsi calculé est [.1 ; .1].

La génération d'un bloc complémentaire permet d'éviter que des valeurs d'adresses IP libres soient communes entre le nœud E et le nœud A. Cela compromettrait alors le fonctionnement du réseau fusionné.

Un acquittement est envoyé de chaque nœud doublon effectuant un changement d'adresses IP vers le second nœud esclave F.

Le second nœud esclave F peut envoyer à son tour un message vers le premier nœud maitre A lorsqu'une adresse IP et un nouveau bloc ont été attribués à un nœud doublon du second sous-réseau 21.

Une étape de dégel, notée DEGEL sur la figure 8, est engagée par le second nœud esclave F lorsque tous les conflits d'adresses ont été résolus.

Le DEGEL comprend la diffusion d'un message à tous les nœuds deux sous réseaux 20, 21 indiquant que l'étape de GEL est terminée, ce message comprend l'identifiant du second nœud esclave. En outre, un nouvel identifiant réseau ID₂₂ est diffusé à tous les nœuds des deux sous réseaux 20, 21.

A ce stade, dans un mode de réalisation, le message DEGEL peut comprendre les nouvelles adresses IP attribuées ainsi que les nouveaux blocs qui ont été calculés lorsque cette étape n'a pas été encore réalisée.

Les nœuds du premier sous réseau 20 recevant le message DEGEL peuvent :
- mettre à jour les nouvelles adresses IP attribuées aux nœuds doublons du second sous-réseau 21,
- calculer les nouveaux blocs complémentaires et ;
- associer aux adresses IP les identifiants.

Dans un autre mode de réalisation, les nouvelles adresses IP et la répartition des blocs entre nœuds sont automatiquement connues des nœuds du réseau par le biais du protocole de routage et du protocole de distribution des adresses IP dans le réseau après le dégel des sous-réseaux.

Le message DEGEL peut comprendre un minuteur permettant la prise en compte des nouvelles données du protocole OLSR à savoir les nouveaux identifiants et la découverte des nouveaux nœuds dans le réseau fusionné.

Le minuteur peut être enclenché au sein de chaque nœud du nouveau réseau fusionné de manière à attendre que chaque nœud prenne en compte la nouvelle topologie du réseau. Ainsi aucune nouvelle découverte d'un autre sous-réseau, ou d'attribution d'une nouvelle adresse IP d'un nouveau nœud n'est effectuée jusqu'à la fin d'un temps imparti permettant d'achever le procédé de fusion.

Selon un mode de réalisation, le nouvel identifiant réseau ID₂₂ est calculé de la manière suivante : une comparaison est réalisée entre l'identifiant ID₂₀ du premier sous-réseau et l'identifiant ID₂₁ du second sous-réseau. Le plus grand identifiant des deux identifiants est choisi comme l'identifiant du réseau fusionné, on a : MAX(ID₂₀, ID₂₁) = ID₂₂.

Chaque nœud est en mesure de calculer le nouvel identifiant du réseau fusionné ou de vérifier que l'identifiant du réseau fusionné reçu est le bon. Dans un mode de réalisation, comme décrit précédemment, c'est le nœud esclave qui indique le nouvel identifiant du réseau fusionné aux nœuds du réseau.

Chaque nœud du réseau fusionné calcule sa table de routage ainsi que la table comprenant ses données d'authentification ID TABLE.

Un avantage du procédé de détection d'une situation de fusion et du procédé de fusion de l'invention est d'assurer une fusion de sous-réseaux ad hoc selon une séquence qui permet d'éviter tout conflit d'adresses IP.

En outre l'invention concerne un système selon la revendication 4 permettant la mise en œuvre des procédés de l'invention. Le système comprend une pluralité de nœuds d'un réseau, tels que des mobiles. Les nœuds comportent au moins une mémoire pour le stockage des tables de routage des données d'authentification. En outre, chaque nœud comprend des moyens de calculs pour effectuer les opérations définies dans les étapes du procédé de détection d'une situation de fusion et les étapes du procédé de fusion de l'invention.

## Revendications

1. Procédé de fusion de deux sous-réseaux (20, 21) d'un réseau ad hoc implémentant le protocole de routage D2HCP, un nœud maitre (N_{MA}) étant déterminé parmi un premier sous-réseau (20) et un nœud esclave (N_{ES}) étant déterminé parmi le second sous-réseau (21), **caractérisé en ce que** le procédé comprend :
• une émission (40, ECH2) d'un premier ensemble (ENS1) de données du nœud maitre (N_{MA}) vers le nœud esclave (N_{ES}), ledit premier ensemble (ENS1) comprenant :
∘ les identifiants (IDA, IDB, IDC) de tous les nœuds (A, B, C) du sous-réseau (20) comprenant le nœud maitre (N_{MA}) ;
∘ les adresses IP (IP_{A}, IP_{B}, IP_{C}) de tous les nœuds (A, B, C) du sous-réseau (20) comprenant le nœud maitre (N_{MA}), chaque identifiant (IDi) de nœud (i) étant associé à une unique adresse IP,
• une comparaison (COMP2(@IP)) de chaque adresse IP du premier ensemble (ENS1) reçue avec les adresses IP d'un second ensemble (ENS2) de données d'authentification du nœud esclave (N_{ES}), ce dernier ensemble comprenant les identifiants (IDj) et les adresses IP des nœuds (j) connus du nœud esclave (N_{ES}) du second sous-réseau (21), de sorte à identifier une liste (LIST) de nœuds doublons correspondant à des nœuds du second sous-réseau (21) ayant les mêmes adresses IP que des nœuds du premier sous-réseau (20) ;
• Une construction d'un nouvel ensemble de données d'authentification (ID TABLE(N_{ES})) des nœuds des deux sous-réseaux (20, 21) par le nœud esclave ;
• une construction d'une nouvelle table de routage avec toutes les adresses IP des deux sous-réseaux (20, 21) dans chaque nœud du réseau fusionné comportant les nœuds des deux sous-réseaux (20, 21) par le nœud esclave (N_{ES});
• une attribution du nouvel identifiant (ID₂₂) du réseau fusionné comportant les nœuds des deux sous-réseaux (20, 21) par le nœud esclave (N_{ES});
• une diffusion des données du nouvel ensemble de données d'authentification (ID TABLE(N_{ES})) du nœud esclave (N_{ES}) à tous les nœuds (i) du réseau fusionné.

2. Procédé de fusion selon la revendication précédente, **caractérisé en ce que** chaque nœud comprenant un bloc d'adresses IP libres, le procédé comprenant :
• une allocation d'une nouvelle adresse IP (ALLOC IP) à au moins un nœud (E) ayant une adresse IP doublon comprise dans la liste (LIST) définie précédemment, la nouvelle adresse étant choisie parmi les adresses IP libres connues du nœud esclave ;
• une diffusion de la nouvelle adresse IP aux nœuds du second sous-réseau (21);
• une mise à jour du second ensemble de données d'authentification (ENS2) du nœud esclave (N_{ES}) du second sous-réseau (21) avec au moins la nouvelle adresse IP du nœud (E) ayant eu une nouvelle adresse IP attribuée.

3. Procédé de fusion selon la revendication précédente, **caractérisé en ce que** :
▪ une première allocation (ALLOC BLOC) d'un nouveau bloc d'adresses IP est générée dans au moins un nœud doublon (E) du second sous-réseau (21), le bloc étant construit à partir de l'adresse IP dudit nœud doublon (E) et du bloc d'adresses IP dans lequel le nœud esclave a choisi la nouvelle adresse IP du nœud doublon (E) ;
▪ une seconde allocation (ALLOC BLOC) d'un nouveau bloc d'adresses IP est générée dans le nœud (A) du premier sous-réseau (20) ayant une adresse en doublon (.1) avec un nœud (E) du second sous-réseau (21), le nouveau bloc ne comprenant pas d'adresses IP en commun avec d'autres blocs existants ;
▪ une troisième allocation (ALLOC BLOC) d'un nouveau bloc d'adresses IP généré dans le nœud (i) du premier sous-réseau (20) ou du second sous-réseau (21) dont le bloc initial contient la nouvelle adresse IP affectée à au moins un nœud doublon (E) du second sous-réseau (21), le nouveau bloc ne comprenant pas d'adresses IP en commun avec d'autres blocs existants.

4. Système de fusion de deux sous-réseaux (20, 21) ad hoc implémentant le protocole d'adressage D2HCP, le premier sous-réseau (20) comportant une pluralité (p) de nœuds (A, B, C) et le second sous-réseau (21) comportant une pluralité (q) de nœuds (E, F), **caractérisé en ce que** le système comprend au moins un premier nœud du premier sous-réseau et au moins un nœud du second sous-réseaux, l'au moins un premier nœud et l'au moins un second nœud étant configurés pour mettre en œuvre le procédé de fusion de l'une quelconque des revendications 1 à 3.

## Patentansprüche

1. Zusammenschlussverfahren von zwei Teilnetzen (20, 21) eines ad hoc-Netzes, das das Routingprotokoll D2HCP implementiert, wobei ein Master-Knoten (N_{MA}) aus einem ersten Teilnetz (20) bestimmt wird und ein Slave-Knoten (N_{ES}) aus dem zweiten Teilnetz (21) bestimmt wird, **dadurch gekennzeichnet, dass** das Verfahren umfasst:
• ein Senden (40, ECH2) einer ersten Gruppe (ENS1) von Daten des Master-Knotens (N_{MA}) zum Slave-Knoten (N_{ES}), wobei die erste Gruppe (ENS1) umfasst:
∘ die Benutzerkennungen (IDA, IDB, IDC) aller Knoten (A, B, C) des Teilnetzes (20), das den Master-Knoten (N_{MA}) umfasst;
∘ die IP-Adressen (IPA, IPB, IPC) aller Knoten (A, B, C,) des Teilnetzes (20), das den Master-Knoten (N_{MA}) umfasst, wobei jede Benutzerkennung (IDi) des Knotens (i) einer einzigartigen IP-Adresse zugeordnet ist,
• einen Vergleich (COMP2(@IP)) jeder IP-Adresse der ersten Gruppe (ENS1), der mit den IP-Adressen einer zweiten Gruppe (ENS2) von Authentifizierungsdaten des Slave-Knotens (NES) empfangen wird, wobei diese Gruppe die Benutzerkennungen (IDj) und die IP-Adressen der Knoten (j) umfasst, die dem Slave-Knoten (N_{ES}) des zweiten Teilnetzes (21) derart bekannt sind, dass eine Liste (LIST) von Dublettenknoten, die den Knoten des zweiten Teilnetzes (21) mit denselben IP-Adressen wie den Knoten des ersten Teilnetzes (20) entsprechen, identifiziert wird;
• eine Konstruktion einer neuen Gruppe von Authentifizierungsdaten (ID TABLE(N_{ES})) der Knoten der zwei Teilnetze (20, 21) durch den Slave-Knoten;
• eine Konstruktion einer Routing-Tabelle mit allen IP-Adressen der zwei Teilnetze (20, 21) in jedem Knoten des zusammengeschlossenen Netzes, das die Knoten der zwei Teilnetze (20, 21) durch den Slave-Knoten (NES) umfasst;
• eine Vergabe der neuen Benutzerkennung (ID22) des zusammengeschlossenen Netzes, das die Knoten der zwei Teilnetze (20, 21) umfasst, durch den Slave-Knoten (N_{ES});
• eine Verteilung der Daten der neuen Gruppe von Authentifizierungsdaten (ID TABLE (N_{ES})) des Slave-Knotens (N_{ES}) an alle Knoten (i) des zusammengeschlossenen Netzes.

2. Zusammenschlussverfahren gemäß dem voranstehenden Anspruch, **dadurch gekennzeichnet, dass** jeder Knoten einen Block freier IP-Adressen umfasst, wobei das Verfahren umfasst:
• eine Zuteilung einer neuen IP-Adresse (ALLOC IP) zu wenigstens einem Knoten (E) mit einer Dubletten-IP-Adresse, die in der zuvor definierten Liste (LIST) inbegriffen ist, wobei die neue Adresse aus den freien IP-Adressen ausgewählt wird, die dem Slave-Knoten bekannt sind;
• ein Versenden der neuen IP-Adresse an die Knoten des zweiten Teilnetzes (21);
• eine Aktualisierung der zweiten Gruppe von Authentifizierungsdaten (ENS2) des Slave-Knotens (N_{ES}) des zweiten Teilnetzes (21) mit wenigstens der neuen IP-Adresse des Knotens (E) mit einer neuen zugeordneten IP-Adresse.

3. Zusammenschlussverfahren gemäß dem voranstehenden Anspruch, **dadurch gekennzeichnet, dass**:
▪ eine erste Zuteilung (ALLOC BLOC) eines neuen IP-Adressblocks in wenigstens einem Dublettenknoten (E) des zweiten Teilnetzes (21) erzeugt wird, wobei der Block ausgehend von der IP-Adresse des genannten Dublettenknotens (E) und des IP-Adressblocks aufgebaut wird, in dem der Slave-Knoten die neue IP-Adresse des Dublettenknotens (E) gewählt hat;
▪ eine zweite Zuteilung (ALLOC BLOC) eines neuen IP-Adressblocks im Knoten (A) des ersten Teilnetzes (20) erzeugt wird, der eine Dublettenadresse (1) mit einem Knoten (E) des zweiten Teilnetzes (21) aufweist, wobei der neue Block keine gemeinsamen IP-Adressen mit anderen vorhandenen Blöcken umfasst;
▪ eine dritte Zuordnung (ALLOC BLOC) eines neuen IP-Adressblocks, der im Knoten (i) des ersten Teilnetzes (20) oder des zweiten Teilnetzes (21) erzeugt wird, dessen ursprünglicher Block die neue IP-Adresse enthält, die wenigstens einem Dublettenknoten (E) des zweiten Teilnetzes (21) zugeordnet wird, wobei der neue Block keine gemeinsamen IP-Adressen mit anderen vorhandenen Blöcken umfasst.

4. Zusammenschlusssystem von zwei ad hoc-Teilnetzen (20, 21), das das Adressierungsprotokoll D2HCP implementiert, wobei das erste Teilnetz (20) eine Vielzahl (p) von Knoten (A, B, C, D) umfasst und das zweite Teilnetz (21) eine Vielzahl (q) von Knoten (E, F) umfasst, **dadurch gekennzeichnet, dass** das System wenigstens einen ersten Knoten des ersten Teilnetzes und wenigstens einen Knoten des zweiten Teilnetzes umfasst, wobei der wenigstens eine erste Knoten und der wenigstens eine zweite Knoten konfiguriert sind, um das Zusammenschlussverfahren gemäß irgendeinem der Ansprüche 1 bis 3 umzusetzen.

## Claims

1. Method for merging two sub-networks (20, 21) of an ad hoc network implementing the D2HCP routing protocol, a master node (N_{MA}) being determined from among a first sub-network (20) and a slave node (N_{ES}) being determined from among the second sub-network (21), **characterised in that** the method comprises:
- a transmitting (40, ECH2) of a first data set (ENS1) from the master node (N_{MA}) to the slave node (N_{ES}), said first set (ENS1) comprising:
∘ the identifiers (IDA, IDB, IDC) of all the nodes (A, B, C) of the sub-network (20) comprising the master node (N_{MA}).
∘ the IP addresses (IP_{A}, IP_{B}, IP_{C}) of all the nodes (A, B, C) of the sub-network (20) comprising the master node (N_{MA}), each node (i) identifier (IDi) being associated with a single IP address,
- a comparing (COMP2(@IP)) of each IP address of the first set (ENS1) received with the IP addresses of a second set (ENS2) of authentication data of the slave node (N_{ES}), the latter set comprising the identifiers (IDj) and the IP addresses of the nodes (j) known to the slave node (N_{ES}) of the second sub-network (21), in order to identify a list (LIST) of duplicate nodes corresponding to nodes of the second sub-network (21) having the same IP addresses as the nodes of the first sub-network (20).
- A constructing of a new set of authentication data (ID TABLE(N_{ES})) of the nodes of the two sub-networks (20, 21) by the slave node.
- a constructing of a new routing table with all the IP addresses of the two sub-networks (20, 21) in each node of the merged network comprising the nodes of the two sub-networks (20, 21) by the slave node (N_{ES});
- an attributing of the new identifier (ID₂₂) of the merged network comprising the nodes of the two sub-networks (20, 21) by the slave node (N_{ES});
- a diffusing of the data of the new set of authentication data (ID TABLE(N_{ES})) from the slave node (N_{ES}) to all the nodes (i) of the merged network.

2. Method for merging according to the preceding claim, **characterised in that** each node comprising a block of free IP addresses, the method comprising:
- an allocating of a new IP address (ALLOC IP) to at least one node (E) having a duplicate IP address comprised in the list (LIST) defined hereinabove, the new address being chosen from the free IP addresses known to the slave node.
- a diffusing of the new IP address to the nodes of the second sub-network (21);
- an updating of the second set of authentication data (ENS2) of the slave node (N_{ES}) of the second sub-network (21) with at least the new IP address of the node (E) that has a new IP addressed attributed.

3. Method for merging according to the preceding claim, **characterised in that**:
- a first allocation (ALLOC BLOC) of a new block of IP addresses is generated in at least one duplicate node (E) of the second sub-network (21), the block being constructed from the IP address of said duplicate node (E) and from the block of IP addresses wherein the slave node has chosen the new IP address of the duplicate node (E).
- a second allocation (ALLOC BLOC) of a new block of IP addresses is generated in the node (A) of the first sub-network (20) that has a duplicate address (.1) with a node (E) of the second sub-network (21), the new block not comprising any IP addresses shared with other existing blocks.
- a third allocation (ALLOC BLOC) of a new block of IP addresses generated in the node (i) of the first sub-network (20) or of the second sub-network (21) of which the initial block contains the new IP address assigned to at least one duplicate node (E) of the second sub-network (21), the new block not comprising any IP addresses shared with other existing blocks.

4. System for merging two sub-networks (20, 21) ad hoc implementing the D2HCP addressing protocol, the first sub-network (20) comprising a plurality (p) of nodes (A, B, C) and the second sub-network (21) comprising a plurality (q) of nodes (E, F), **characterised in that** the system comprises at least one first node of the first sub-network and at least one node from the second sub-network, the at least one first node and the at least one second node being configured to implement the method for merging of any of claims 1 to 3.
